# EUROPEAN PATENT APPLICATION

(11) **EP 2 757 705 A1**
(43) Date of publication of application: **23.07.2014**
(21) Application number: 13152147.8
(22) Date of filing: 22.01.2013
(51) Int. Cl.: H04B 3/56

(54) **Medium voltage power line communication coupler**

(71) Applicant: ABB Technology AG, 8050 Zürich (CH)
(72) Inventor: Leeb, Christian, 8006 Zürich (CH); Isch, Daniel, 5600 Lenzburg (CH); Cachin, Dominique, 8400 Winterthur (CH)
(74) Representative: ABB Patent Attorneys

(57) **Abstract**

The present invention is concerned with the field of power line communication PLC, in particular with a device for coupling a communication signal to a power line. According to the invention, a capacitive Medium Voltage MV Power Line Communication PLC coupler 1 is provided, i.e. for capacitive coupling of communication signals to Medium voltage MV power conductors 4, with a signal connector 2, e.g. a coaxial jack, for exchanging communication signals with a transceiver, an MV connector 3 to be connected to an MV power conductor 4, and a coupling capacitor 5 solidly embedded in a volume of insulating material 15 electrically connecting the two connectors 2, 3. The MV PLC coupler 1 has an MV end 6, i.e. a terminal including the MV connector 3, that is adapted or shaped to be mounted, e.g. removably attached or in a form-fitting manner providing mechanical adherence and electrical insulation, to an MV bushing 7, i.e. an interface bushing, of a compact MV switchgear enclosure such as a cubicle.

## Description

### FIELD OF THE INVENTION

The invention relates to the field of power line communication, in particular to a device for coupling a communication signal to a power line.

### BACKGROUND OF THE INVENTION

With an ever increasing demand for reliable communication channels it is economically very interesting to use already existing lines such as power lines for both narrowband and broadband communication. This way no costly and time consuming set up of a separate line is necessary. Thus, power distribution networks are commonly used for transmitting communication signals, e.g. industrial control signals. This is known as power line communication PLC. For instance, power lines are used as communication means for operational data of a power grid, i.e. to monitor and control power infrastructure.

For distributing power over various distances different technologies are used. In particular, power is transmitted over long distances using high voltage, distributed over medium distances using medium voltage, and used by a consumer, e.g. inside buildings, over low voltage transmission lines. In the past mainly high voltage HV PLC, i.e. 110kV and up-wards, was of particular interest. The respective power lines such as high voltage overhead lines were employed for long distance communication and transmitting large amounts of information. Most recently, low voltage LV PLC, i.e. 110V or 230V, has been employed for communication, in particular for automatic meter reading or advanced metering infrastructure.

The document US 6,255,935 describes an apparatus for injecting signals into electrical power lines. A coupling unit is proposed, in which a connecting cable is integrated in a housing of the coupling capacitor. In the region where a conductor passes through the grounded housing of the coupling capacitor, an electrical field is reduced by means of a housing wall having a special shape.

However, the medium voltage MV power lines, i.e. voltages of 5kV and up to 72kV, have not been used on a substantial scale for communication. This is due to the fact that MV PLC imposes great constraints on technology and devices. For PLC in general and for MV PLC in particular coupling of the communication signal to the power lines, i.e. to a LV, MV or HV conductor, is a major obstacle.

The primary purpose of the power line is the transport of electrical energy hence it is not specifically desgined to transmit communication signals. Therefore, coupling the communication signal to the power line is not a trivial task and is typically accomplished via capacitors of adequate size. These capacitors are blocking the 50 or 60 Hz power signal between the power-line and the ground potential. At the same time the capacitors need to be transparent for higher frequency signals, such as the communication signal of the PLC system.

For MV PLC, having cost effective coupling devices is essential. The power line used for MV PLC is employed for medium distances and comprises many nodes. To distribute the communication signal each node needs to be equipped with a coupler. Therefore, many coupling devices are necessary for MV PLC in particular compared to HV PLC where the respective power line is employed for long distances and comprises only very few nodes. At the same time MV PLC carries a smaller amount of information to be transmitted compared to HV PLC. Thus, MV PLC couplers need to be more cost effective than comparable devices for HV PLC. Furthermore, as many couplers are needed for MV PLC the coupler needs to be easy to install.

In addition, there is typically very little space for the installation of an MV PLC coupler, e.g. in a primary switch yard of an MV grid such as a ring main unit RMU. These RMUs are typically based on highly integrated gas insulated switch gears optimized with respect to size and required space. Thus, a coupler used with these switchgears has to meet the same constraints.

However, the coupler needs to prevent the power from being passed through to a transceiver or communication device attached to the coupler on the adjacent site of the power line. This is typically done by using large amounts of insulating material requiring large amounts of space respectively. Unfortunately, for MV PLC couplers this space is not available. Therefore, constraints on volume and space are great for said couplers and are not meet by state of the art devices.

### DESCRIPTION OF THE INVENTION

It is therefore an objective of the invention to enable efficient and economical use of Medium Voltage MV power lines for transmitting communication signals, in particular, to provide a Power Line Communication PLC coupler meeting the constraints for MV PLC. This objective is achieved by a capacitive MV PLC coupler according to claim 1 and a MV Power Line Communication PLC coupling arrangement according to claim 5. Preferred embodiments are evident from the dependent patent claims, wherein the claim dependency shall not be construed as excluding further meaningful claim combinations.

According to the invention, a capacitive Medium Voltage MV Power Line Communication PLC coupler is provided for capacitive coupling of communication signals to MV power conductors. The MV PLC coupler includes a signal connector, e.g. a coaxial jack, for exchanging communication signals with a transceiver, an MV connector to be connected to an MV power conductor, and a coupling capacitor solidly embedded in a volume of insulating material electrically connecting the two connectors. The MV PLC coupler has an MV end or terminal including the MV connector that is adapted or shaped to be mounted, e.g. removably attached in a form-fitting manner providing mechanical adherence and electrical insulation, to an MV bushing of a compact MV switchgear enclosure such as a cubicle, thereby providing electrical contact between the MV power conductor and the MV connector of the coupler.

In a preferred variant of the invention, the MV PLC coupler includes a MV surge arrestor connected to the MV connector. The surge arrestor may be solidly embedded in the insulating material along with the coupling capacitor.

In a further variant of the invention, the MV PLC coupler includes an adapter part with a second MV end for connecting an MV cable to the MV power conductor. Preferably, the first end and the second end of the adapter part are identical.

The present invention also relates to a Medium Voltage MV Power Line Communication PLC coupling arrangement for coupling of communication signals to MV power conductors. The arrangement comprises an adapter including a first end or terminal adapted or shaped to be mounted, e.g. removably attached, to an MV bushing of a compact MV switchgear enclosure and including a second end or terminal with a second MV connector. The arrangement comprises a capacitive MV PLC Coupler with a signal connector, e.g. a coaxial jack, for exchanging communication signals with a transceiver, a MV connector, and a coupling capacitor, e.g. solidly embedded in a volume of insulating material, electrically connecting the two connectors. The MV PLC coupler has an MV end or terminal including the MV connector as a counterpart to the second MV connector of the adapter, and is adapted or shaped to be mounted, e.g. removably attached, to the second end of the adapter, thereby providing electrical contact between the second MV connector of the adapter and the MV connector of the coupler. Accordingly, the invention provides a coupling arrangement enabling efficient and economical use of MV power lines for transmitting communication signals by integrating a capacitor in an existing volume of insulating material of an insulation plug.

A preferred variant of the invention is characterized in that the adapter includes a surge arrestor connected to the second connector. The surge arrestor may be solidly embedded in the insulating material and the second connector may be a MV connector.

In an advantageous embodiment of the invention the adapter part includes a cable connector with a cable termination of an MV cable to be connected to the MV switchgear.

A further embodiment of the invention is characterized in that the first end and the second end of the adapter are identical, with coupler and bushing having the same shape.

### BRIEF DESCRIPTION OF THE DRAWINGS

The subject matter of the invention will be explained in more detail in the following text with reference to preferred exemplary embodiments which are illustrated in the attached schematic drawings, in which:
Fig.1 shows a capacitive Medium Voltage MV Power Line Communication PLC coupler with an adapter part;
Fig.2 shows the coupler and adaptor connected to a bushing of a switchgear enclosure;
Fig.3 shows the coupler and adapter with a surge arrestor connected to the bushing; and
Fig.4 shows a coupler and a T-shaped combined adapter and cable connector connected to the bushing.

The reference symbols used in the drawings, and their meanings, are listed in summary form in the list of designations. In principle, identical parts are provided with the same reference symbols in the figures.

### DETAILED DESCRIPTION OF PREFERRED EMBODIMENTS

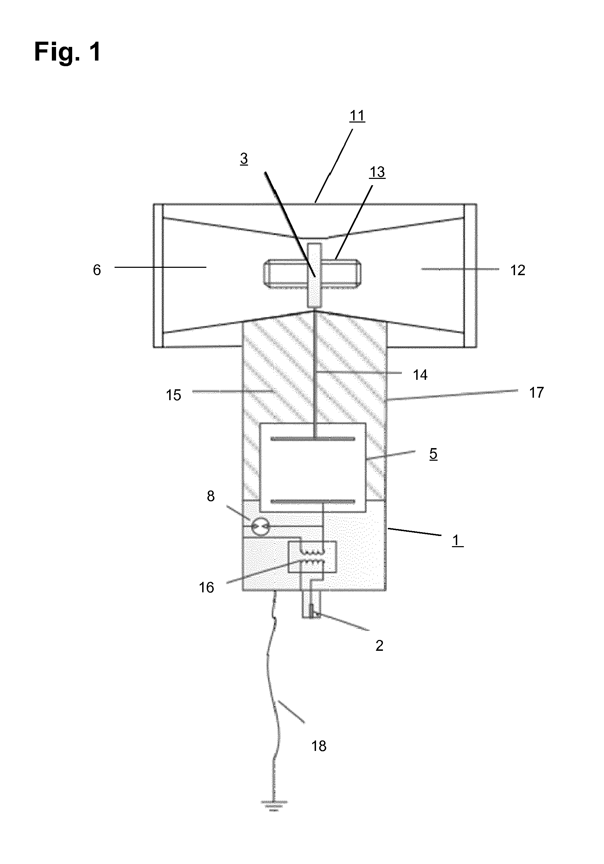

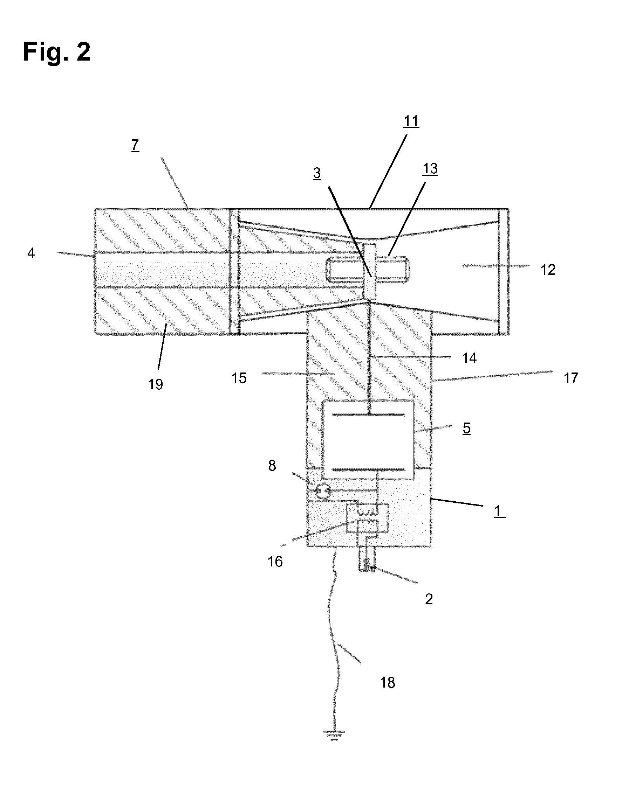

Fig.1 shows a capacitive Medium Voltage MV Power Line Communication PLC coupler 1 with a signal connector 2 for exchanging communication signals with a transceiver, an MV connector 3 to connect to an MV power conductor 4 shown in Fig.2, and a coupling capacitor 5 electrically connecting the two connectors 2, 3.

The coupler 1 has a first MV end 6 that is adapted to be mounted to a bushing or feed-through 7 of a MV switchgear enclosure as shown in Fig.2. The switchgear enclosure may be part of a MV switch yard, e.g. a ring main unit RMU. For these switchgear enclosures standard cable bushings are used. Exemplary bushings according to IEC 60137 are described in the French patent publication FR 2779564 B1. While different bushing designs may be employed for the switchgear enclosure, the first MV end 6 of the coupler is always designed or shaped to fit tightly to the respective counterpart of the bushing.

The coupler depicted in Fig.1 also includes a surge arrestor 8 being placed in between the capacitor 5 and the connector 2. The surge arrestor 8 protects any communication equipment connected to the connector 2 from damage caused by voltage passed through the capacitor 5 from the power line. The voltage of the power line is usually much higher than most communication devices can bear, thus leaking voltage can cause serious damage to the device. The surge arrestor 8 typically comprises a high-voltage terminal and a ground terminal, where in case of a voltage leak from the power line the current is diverted through the surge arrestor 8.

The coupler depicted in Fig.1 is a T-shaped combined coupler-adapter including an adapter part 11 with an optional second MV end 12 for connecting e.g. a MV cable to the MV switchgear via the adapter part 11. The MV power conductor, the ring-shaped MV connector 3, and the MV cable are mutually fixed by means of screws, or by means of a single stud 13. The adapter part 11 also includes the first MV end 6 adapted to be mounted to the MV bushing 7 of the MV switchgear enclosure as described. The coupler 1 further comprises a conductor 14 to connect the capacitor 5 with the first MV connector 3. The conductor 14 and the capacitor 5 are embedded in insulating material 15 in order to protect the surroundings from the voltage passed through the power line.

The capacitor 5 is blocking the 50 or 60Hz power signal of the power line. However, the capacitor 5 needs to pass through the high frequency communication signal to the connector 2 and eventually pass it on to any communication device attached to the connector 2. In order to have a useful communication signal to be passed on to the communication device a transformer 16 may be necessary to transform the incoming or outgoing communication signal.

The transformer 16 and the surge arrestor 8 are connected to a housing 17 of the coupler 1, where the housing 17 is connected to a ground 18. In case of a voltage leaking from the power line through the capacitor 5 the surge arrestor 8 redirects the current to ground 18 and protects any connected communication device.

Fig.2 shows the coupler 1 and the adapter 11 connected to the bushing 7 of a switchgear enclosure. The bushing is comprised of a power conductor 4 and surrounding insulating material 19. The power conductor 4 is a solid rod of conducting material including an internal thread at the end for accommodating the stud 13. The first MV end 6 of the adaptor 11 is adapted or shaped to fit on the bushing 7 so that the insulating material 19 is received by the first MV end 6 and the conductor 4 is connected to the MV connector 3.

The embodiment of the coupler 1 shown in Fig.2 allows to connect on one side of the adapter 11 to a bushing 7 at the MV end 6 and to connect to another MV line or cable on the second MV end 12. The illustrated adapter 11 is symmetrical with respect to the ends 6, 12. However, the adaptor 11 may be shaped differently to fit to a bushing 7 of a first shape on one end 6 and to connect to a cable of a different second shape on the second end 12.

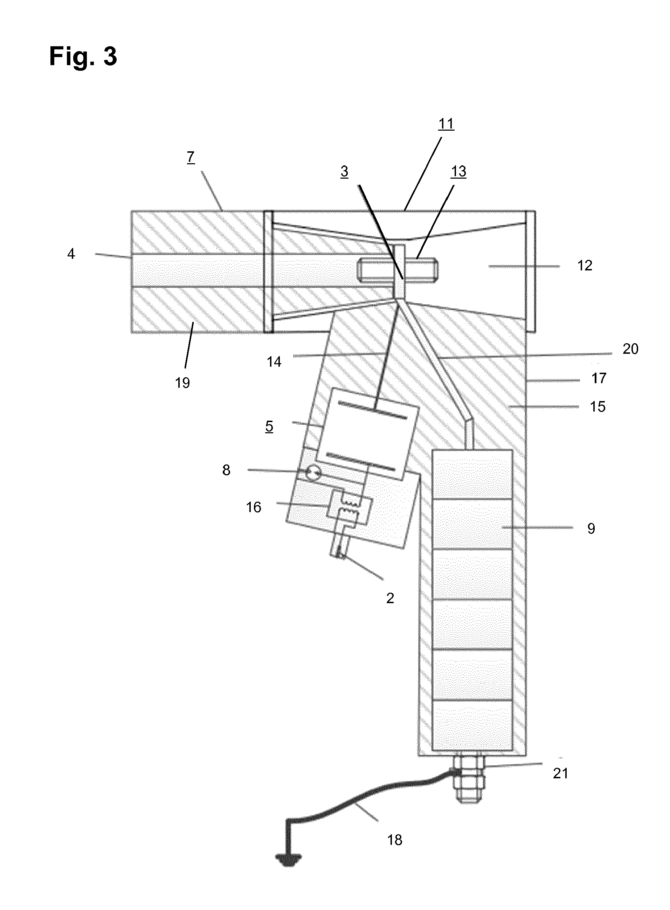

Fig.3 shows an advantageous embodiment of the coupler 1 and the adapter 11 with an MV or power surge arrestor 9. In this case the coupler 1 is easily embedded in the space for the surge arrestor 9 and the respective insulating material 15 without adding a large extra volume. This way the coupler 1 can be easily integrated in an already existing surge arrestor 9 and meet tight constraints with respect to volume. The conductor 14 connecting the capacitor 5 to the MV connector 3 is then easily connected to a conductor 20 of the surge arrestor 9. Furthermore, the connector 21 connecting to ground 18 may also be used by the coupler 1 and its surge arrestor 8 and transformer 16.

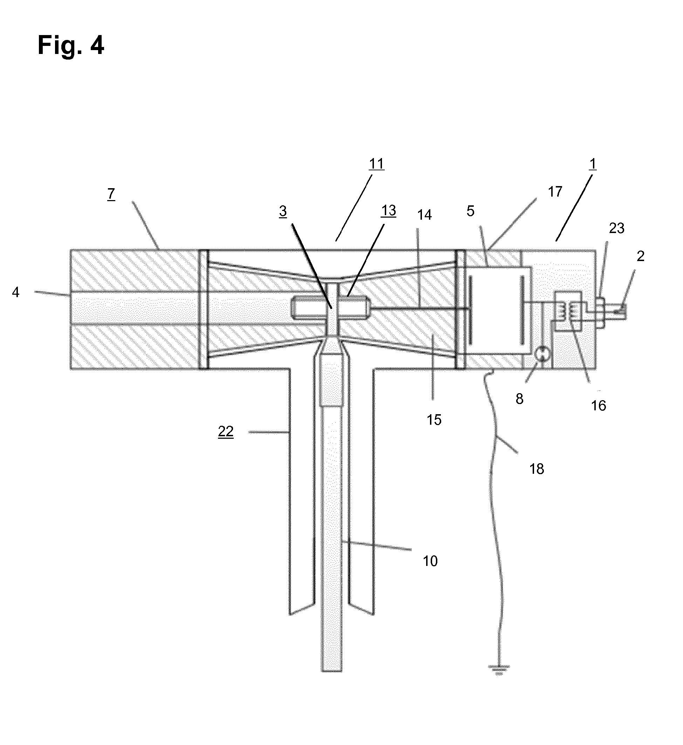

Fig.4 shows a further embodiment of the coupler 1 with a T-shaped combined adapter 11 and cable connector 22. The T-shaped adapter-connector is stackable and includes an MV cable end or termination 10. Stackable cable connectors 22 are used to connect more than one cable to the same bushing 7. Conventionally, the unused MV end of the ultimate stacked adapter 11 is closed and insulated with a special insulation plug screwed onto stud 13. The insulation plug is comprised of insulating material 15 which can also incorporate the coupler 1 with no extra space. The resulting MV PLC coupling arrangement with a coupler matching an MV end of an adapter-connector thus provides maximum flexibility.

### LIST OF DESIGNATIONS

- 1: Coupler
- 2: Signal connector
- 3: MV connector
- 4: MV power conductor
- 5: Capacitor
- 6: MV end
- 7: MV bushing
- 8: Surge arrestor
- 9: Power surge arrestor
- 10: MV cable
- 11: Adapter
- 12: Second end
- 13: Stud
- 14: Conductor
- 15: Insulating material
- 16: Transformer
- 17: Housing
- 18: Ground
- 19: Insulating material
- 20: Conductor
- 21: Connector
- 22: Cable connector
- 23: Nut

## Claims

1. A capacitive Medium Voltage MV Power Line Communication PLC coupler (1) with a signal connector (2) for exchanging communication signals with a transceiver, an MV connector (3) to be connected to an MV power conductor (4), and a coupling capacitor (5) electrically connecting the two connectors (2, 3), **characterized in that** the MV PLC coupler (1) has a first MV end (6) that is adapted to be mounted to a MV bushing (7) of a MV switchgear enclosure.

2. The MV PLC coupler of claim 1, **characterized in that** it includes a power surge arrestor (9) connected to the MV connector (3).

3. The MV PLC coupler of claim 1, **characterized in that** it includes a second MV end (12) for connecting a MV cable to the MV power conductor (4).

4. A Medium Voltage MV Power Line Communication PLC coupling arrangement comprising
an adapter (11) including a first end adapted to be mounted to an MV bushing (7) of a MV switchgear enclosure and including a second end with a second MV connector (13), and
a capacitive MV PLC coupler (1) with a signal connector (2) for exchanging communication signals with a transceiver, a MV connector, and a coupling capacitor (5) electrically connecting the two connectors (2, 3), wherein the MV PLC coupler (1) has an MV end including the MV connector and adapted to be mounted to the second end of the adapter (11).

5. The arrangement of claim 4, **characterized in that** the adapter (11) includes a power surge arrestor (9) connected to the second connector (13).

6. The arrangement of claim 4, **characterized in that** the adapter (11) includes a cable connector (22) for connecting an MV cable to the MV switchgear.

7. The arrangement of claim 4, **characterized in that** the first end (6) and the second end (12) of the adapter (11) are identical.
